# EUROPÄISCHE PATENTSCHRIFT

(11) **EP 3 911 858 B1**
(45) Veröffentlichungstag und Bekanntmachung des Hinweises auf die Patenterteilung: **03.04.2024**
(21) Anmeldenummer: 19816637.3
(22) Anmeldetag: 04.12.2019
(51) Int. Cl.: F03G 3/00

(54) **SPEICHERVORRICHTUNG UND -VERFAHREN ZUM SPEICHERN UND ABRUFEN VON ENERGIE**
STORAGE SYSTEM AND METHOD FOR STORING AND RELEASING ENERGY
DISPOSITIF ACCUMULATEUR ET PROCÉDÉ D'ACCUMULATION ET DE DEMANDE D'ÉNERGIE

(30) Priorität: 12.12.2018 DE 102018009646
(43) Veröffentlichungstag der Anmeldung: 24.11.2021
(73) Patentinhaber: Allion Alternative Energieanlagen GmbH, 76228 Karlsruhe (DE)
(72) Erfinder: ALLION, Axel, 76228 Karlsruhe (DE)
(74) Vertreter: Lichti - Patentanwälte Partnerschaft mbB
(86) Internationale Anmeldenummer: PCT/EP2019/083681
(87) Internationale Veröffentlichungsnummer: WO 2020/120259

(56) Entgegenhaltungen:
- DE-A1-102007 057 323
- DE-A1-102011 119 116
- US-B1- 9 957 018

## Beschreibung

Die Erfindung betrifft eine Speichervorrichtung zum Speichern und Abrufen von Energie, mit mindestens einem Läuferblock, der vertikal beweglich an mindestens einer vertikal angeordneten Führungsstange angeordnet ist, wobei der Läuferblock eine erste Stelleinrichtung mit mindestens einem Motorgenerator aufweist, die derart mit der Führungsstange verbunden ist, dass der Läuferblock mittels der ersten Stelleinrichtung längs der Führungsstange vertikal nach oben bewegbar ist, so dass in einem Motorbetrieb dem Motorgenerator zugeführte elektrische Energie als potentielle Energie des Läuferblocks speicherbar ist, und wobei der Läuferblock nach unten bewegbar ist, so dass in einem Generatorbetrieb die potenzielle Energie des Läuferblocks im Motorgenerator in elektrische Energie umwandelbar ist.

Ferner betrifft die Erfindung ein Verfahren zum Speichern und Abrufen von Energie mittels einer Speichervorrichtung mit einem Läuferblock, der vertikal an einer Führungsstange beweglich ist, und mit einer ersten Stelleinrichtung, die einen Motorgenerator aufweist, und die mit dem Läuferblock verbunden ist, wobei das Verfahren zur Speicherung von Energie die folgenden Schritte umfasst:
- In einem Motorbetrieb wird dem Motorgenerator Energie zugeführt und
- die erste Stelleinrichtung bewegt den Läuferblock vertikal an der Führungsstange nach oben, so dass die zugeführte Energie als potentielle Energie des Läuferblocks gespeichert wird.

Bekannte Speichervorrichtungen aus dem Stand der Technik wandeln extern zugeführte, zu speichernde elektrische Energie zunächst in kinetische Energie um, indem der Läuferblock vertikal nach oben entlang der Führungsstange bewegt wird. Die kinetische Energie führt zu einer Auslenkung des Läuferblocks vertikal nach oben, so dass die kinetische Energie schließlich als potentielle Energie des Läuferblocks aufgrund dessen erhöhter Lage gespeichert wird. Dabei arbeitet der Motorgenerator im Motorbetrieb. Das Dokument US 9 957 018 B1 offenbart eine Speichervorrichtung gemäß dem Oberbegriff der Ansprüche 1 und 13.

Im Generatorbetrieb des Motorgenerators wird der Läuferblock der bekannten Speichervorrichtungen mittels der ersten Stelleinrichtung vertikal nach unten bewegt, so dass die potenzielle Energie des Läuferblocks zunächst, im umgekehrter Weise zum Generatorbetrieb, in kinetische Energie und dann vom Motorgenerator in elektrische Energie umgewandelt wird, die externen Verbrauchern zur Verfügung gestellt werden kann. Nachteilig an diesen Ausgestaltungen sind enorme mechanische Belastungen bei der vertikalen Abwärtsbewegung des Läuferblocks, insbesondere an der ersten Stelleinrichtung. Vor Allem bei Läuferblöcken mit großen Massen ist mit einer mechanischen Überlastung der ersten Stelleinrichtung zu rechnen, was ein ernstzunehmendes Gefahrenpotential darstellt.

Es ist daher die Aufgabe der Erfindung, die Nachteile aus dem Stand der Technik zu beseitigen und eine Speichervorrichtung der genannten Art dahingehend weiter zu entwickeln, dass deren Betrieb und insbesondere die vertikale Abwärtsbewegung des Läuferblocks sicher und definiert steuerbar sind. Eine weitere Aufgabe der Erfindung ist es, das bekannte Verfahren zum Speichern und Abrufen von Energie in gleicher Weise weiterzubilden.

Die Aufgabe wird gelöst durch eine Speichervorrichtung mit den Merkmalen von Anspruch 1. Verfahrensmäßig wird die Aufgabe gelöst durch ein Verfahren nach Anspruch 13.

Die Erfindung basiert auf der Grundüberlegung, dass die vertikale Abwärtsbewegung des Läuferblocks bei den bekannten Speichervorrichtungen in der Regel mit der Erdbeschleunigung von ca. 9,81 m/s² erfolgt. Insbesondere bei einem lange andauernden Generatorbetrieb werden daher große Geschwindigkeiten des Läuferblocks erreicht, was zusammen mit dessen beträchtlicher Masse immense Ansprüche an die mechanische Stabilität der Vorrichtung, insbesondere an die erste Stelleinrichtung, stellt. Die Erfindung geht vom Grundprinzip aus, mit der zweiten Stelleinrichtung eine Komponente vorzusehen, die konstruktiv von der ersten Stelleinrichtung getrennt ist, und die funktional die vertikale Abwärtsbewegung des Läuferblocks bewirkt. Hierdurch ist es im Gegensatz zum Stand der Technik möglich, die Speichervorrichtung auch dauerhaft mechanisch zuverlässig zu betreiben. Für die verfahrensmäßige Erfindung gelten die gleichen Überlegungen.

Die Führungsstange kann als Zahnstange ausgebildet sein, um der vertikalen Bewegung des Läuferblocks sicheren Halt zu geben. In einer Weiterbildung der Erfindung kann die Führungsstange Komponenten aus Stahl und/oder Stahlbeton aufweisen und/oder aus Stahl und/oder Stahlbeton gefertigt sein. Beispielsweise kann die Führungsstange eine Säule aus Stahl und/oder Stahlbeton aufweisen, an der insbesondere die Zahnstange angeordnet ist. Vorzugsweise ist der Läuferblock als fester Massekörper ausgebildet, der insbesondere Komponenten aus Zement und/oder Stahl und/oder Stahlbeton aufweisen und/oder zylinderförmig und/oder rechteckig sein kann. Alternativ dazu kann der Läuferblock sowohl feste als auch flüssige Komponenten aufweisen und insbesondere mit Schüttgut, insbesondere Sand gefüllt sein. Die maximale Hubhöhe des Läuferblocks innerhalb der Speichervorrichtung beträgt vorzugsweise 40 m. Zur einfachen mechanischen Ansteuerung können die erste Stelleinrichtung und/oder die zweite Stelleinrichtung Übersetzungen, wie beispielsweise Zahnräder und/oder Schneckenräder, aufweisen.

Die zweite Stelleinrichtung weist mindestens eine Gewindestange mit einem Gewinde auf, die mit dem Läuferblock in Eingriff steht und diesen durchgreift. Zur Verbesserung der mechanischen Verbindung kann das Gewinde der Gewindestange mit einem Innengewinde des Läuferblocks in Eingriff stehen. Besonders vorzugsweise ist die Steigung des Gewindes der Gewindestange derart ausgestaltet, dass eine selbstständige Bewegung des Läuferblocks unterbunden ist.

In einer vorteilhaften Ausgestaltung der Erfindung sind mindestens zwei Gewindestangen vorgesehen, die mittels einer gemeinsamen Steuereinheit insbesondere synchron ansteuerbar sind. Insbesondere können genau 2, 4, 6, 8 oder 10 Gewindestangen ausgebildet sein. Die gemeinsame Steuereinheit kann derart ausgebildet sein, dass mindestens zwei Gewindestangen gegenläufig zueinander ansteuerbar sind. Mindestens eine Gewindestange kann in einem äußeren Randbereich des Läuferblocks angeordnet sein, der im Sinne der Erfindung jener Bereich des Läuferblocks ist, der näher zum Rand der Grundfläche des Läuferblocks als zu dessen Mitte angeordnet ist. Bei einer zylindrischen Ausgestaltung des Läuferblocks kann die mindestens eine Gewindestande insbesondere im radial äußeren Randbereich des Läuferblocks angeordnet sein. Im Sinne der Erfindung bezeichnet eine axiale Richtung eine Richtung parallel zu einer Höhenachse des Läuferblocks; eine radiale Richtung steht senkrecht zur axialen Richtung. Besonders vorzugsweise sind sämtliche Gewindestangen im äußeren Randbereich des Läuferblocks angeordnet.

Die zweite Stelleinrichtung ist auf mindestens einem Wälzlager drehbar gelagert, insbesondere ist jede Gewindestange auf mindestens einem Drehlager drehbar gelagert. Das Wälzlager vermindert Reibungskräfte bei der Betätigung der zweiten Stelleinrichtung und verbessert die Effizienz der erfindungsgemäßen Speichervorrichtung. Vorzugsweise ist die zweite Stelleinrichtung, insbesondere die mindestens eine Gewindestange, mittels mindestens eines Wälzlagers, insbesondere mittels mindestens einer Kugelumlaufspindel mit dem Läuferblock verbunden, um die Bewegungseffizienz des Läuferblocks zu verbessern. Die Kugelumlaufspindel ist ein Wälzschraubtrieb mit Kugeln als Wälzkörper und dient als Umsetzung der Drehbewegung der Gewindestange in die vertikale Längsbewegung des Läuferblocks. Die Kugeln der Kugelumlaufspindel sind vorzugsweise mindestens teilweise zwischen dem Innengewinde des Läuferblocks und dem Außengewinde der Gewindestange in Laufrillen angeordnet und können sich über mindestens einen Rückführkanal der Kugelumlaufspindel in einem geschlossenem Kreislauf bewegen.

Die zweite Stelleinrichtung kann derart ausgestaltet sein, dass die vertikale Aufwärtsbewegung des Läuferblocks durch die zweite Stelleinrichtung zusätzlich antreibbar ist. Auf diese Weise kann die zweite Stelleinrichtung die vertikale Aufwärtsbewegung des Läuferblocks, bei der zugeführte elektrische Energie schließlich in potenzielle Energie des Läuferblocks gespeichert werden soll, zusätzlich zur ersten Stelleinrichtung mechanisch antreiben. Hierzu kann die zweite Stelleinrichtung einen Teil der mechanischen Last des Läuferblocks übernehmen, so dass dessen Last auf die erste Stelleinrichtung reduziert ist.

Die vertikalen Geschwindigkeiten des Läuferblocks bei dessen Aufwärts- und/oder Abwärtsbewegungen können veränderlich sein. Im Generatorbetrieb des Motorgenerators ist die Rate, mit der Energie als potenzielle Energie des Läuferblocks gespeichert wird, abhängig von der vertikalen Aufwärtsgeschwindigkeit des Läuferblocks. Ebenso ist beim Motorbetrieb des Motorgenerators die Rate, mit der Energie als elektrische Energie umgewandelt und dadurch verfügbar wird, abhängig von der vertikalen Abwärtsgeschwindigkeit des Läuferblocks. Durch veränderliche vertikale Geschwindigkeiten des Läuferblocks können daher auch die Raten veränderlich sein, mit denen Energie gespeichert und/oder abgerufen wird. Ein ähnlicher Vorteil wird erhalten, wenn die vertikalen Beschleunigungen des Läuferblocks bei dessen Aufwärts- und/oder Abwärtsbewegungen veränderlich sind. Insbesondere eine variable Abwärtsbeschleunigung ist deshalb relevant, da im Stand der Technik stets nur die konstante Erdbeschleunigung von 9,81 m/s² verwendet wurde.

Vorteilhafte Weiterbildungen der Erfindung sehen vor, dass im Generatorbetrieb des Motorgenerators die vertikale Aufwärtsgeschwindigkeit des Läuferblocks zwischen 5 und 15 m/h beträgt. In einem Beispiel kann der Läuferblock einen Maximalhub von 40 m bei einer mittleren Geschwindigkeit von 10 m/h innerhalb von 4 h zurücklegen. Für die vertikale Abwärtsbewegung des Läuferblocks, bei der der Motorgenerator im Generatorbetrieb arbeitet, kann der Läuferblock vertikale Abwärtsgeschwindigkeiten zwischen 1 m/h und 3 m/h erreichen. In einem Beispiel benötigt der Läuferblock für den Maximalhub von 40 m bei einer mittleren Geschwindigkeit von 2 m/h 20 h.

Vorzugsweise ist die erste Stelleinrichtung mit der zweiten Stelleinrichtung synchronisierbar mittels einer gemeinsamen Steuereinheit, die mit der ersten Stelleinrichtung und mit der zweiten Stelleinrichtung verbunden ist. Im Sinne der Erfindung kann damit insbesondere vorgesehen sein, dass die vertikale Aufwärtsbewegung des Läuferblocks im Motorbetrieb des Motorgenerators von der ersten Stelleinrichtung und von der zweiten Stelleinrichtung antreibbar ist, wobei die zweite Stelleinrichtung mindestens teilweise gleichläufig und/oder gegenläufig zur ersten Stelleinrichtung drehbar ist. Dabei sind insbesondere die Drehbewegungen der ersten Stelleinrichtung und der zweiten Stelleeinrichtung derart aufeinander abgestimmt, dass ein gleichmäßiger Antrieb des Läuferblocks erfolgt. Die Verbindung der gemeinsamen Steuereinheit mit der ersten Stelleinrichtung und der zweiten Stelleinrichtung kann kabelgebunden und/oder kabellos ausgestaltet sein, in letzterem Fall insbesondere mittels Funk, Bluetooth oder WLAN.

Besonders vorzugsweise ist die die Führungsstange in einem Mittelbereich des Läuferblocks angeordnet und durchgreift den Läuferblock. Im Sinne der Erfindung bezeichnet Mittelbereich des Läuferblocks jenen Bereich des Läuferblocks in und um dessen Mitte. Bei einem zylindrischen Läuferblock ist der Mittelbereich der radial zentrierte Bereich des Läuferblocks. Insbesondere sind 2, 4, 6, 8 oder 10 Führungsstangen im Mittelbereich des Läuferblocks angeordnet, so dass sich die radialen Kräfte auf die Führungsstangen, die bei den Vertikalbewegungen des Läuferblocks auftreten, gegenseitig kompensieren. Dies erhöht die mechanische Stabilität der erfindungsgemäßen Speichervorrichtung, insbesondere bei der vertikalen Aufwärtsbewegung des Läuferblocks im Motorbetrieb des Motorgenerators.

Die erste Stelleinrichtung kann innerhalb des Läuferblocks angeordnet sein, um die erste Stelleinrichtung vor mechanischen Beschädigungen zu schützen. Es kann vorgesehen sein, dass ein Abstand d₁ der ersten Stelleinrichtung von der Führungsstange veränderbar ist. Aufgrund mechanischer Abnutzungen kann die Verbindung der ersten Stelleinrichtung mit der Führungsstange derart beeinträchtigt sein, so dass eine ideale Übertragung der Kräfte zur Bewirkung der vertikalen Aufwärtsbewegung des Läuferblocks nicht mehr gewährleistet ist. Indem der Abstand d₁ veränderlich ist, können Reibungsverluste vermindert und die Effizienz der erfindungsgemäßen Speichervorrichtung gesteigert werden. Zu diesem Zweck kann mindestens eine Komponente der ersten Stelleinrichtung auf einem Linearschlitten angeordnet und auf diesem in Richtung der Führungsstange beweglich sein, um einen idealen Wert für den Abstand d₁ einzuhalten bzw. wiederherzustellen. Insbesondere kann der Motorgenerator mit dem Linearschlitten verbunden sein.

Vorzugsweise ist eine Regeleinrichtung vorgesehen, mittels der der Abstand d₁ zwischen der ersten Stelleinrichtung und der Führungsstange auf einem vordefinierten Wer haltbar ist, um mechanische Abnutzungserscheinungen zu kompensieren. Die Regeleinrichtung kann optische Komponenten, insbesondere eine Laserkomponente und/oder Fotodioden aufweisen, so dass präzise optische Verfahren zur Abstandsbestimmung und/oder -regelung genutzt werden können.

Um die Menge der gespeicherten potenziellen Energie pro zurückgelegten Meter des Läuferbocks zu erhöhen, kann zwischen dem Läuferblock und einer oberen Abdeckung der Speichervorrichtung mindestens ein Dämpfungselement angeordnet sein, so dass der Läuferblock mit einer Kraftkomponente vertikal nach unten beaufschlagbar ist. Dadurch erhöht sich der Widerstand, der kraftmäßig bei der vertikalen Aufwärtsbewegung des Läuferblocks zu überwinden ist, so dass sich in gleichem Zuge die potenzielle Energie erhöht, die pro zurückgelegten Meter des Läuferblocks gewonnen wird. Das Dämpfungselement kann mechanische Komponenten, wie beispielsweise Federkomponenten, pneumatische Komponenten und/oder hydraulische Komponenten aufweisen.

Vorzugsweise weist die Speichervorrichtung eine obere und/oder eine untere Abdeckung auf, wobei die obere Abdeckung insbesondere den Läuferblock, die Führungsstange, die erste Stelleinrichtung und die zweite Stelleinrichtung überdeckt. Die Führungsstangen können mit der oberen und/oder unteren Abdeckung verbunden und insbesondere an diesen drehbar gelagert sein, vorzugsweise mittels Kugellagern. Die mindestens eine Gewindestange kann mittels mindestens eines Wälzlagers, insbesondere mittels eines Kugellagers, an der oberen und/oder unteren Abdeckung der Speichervorrichtung gelagert sein, um Reibungskräfte bei der Drehbewegung der Gewindestange zu verringern. Vorzugsweise ist vorgesehen, dass die Speichervorrichtung eine Energiekapazität zwischen 0,5 MWh und 10 GWh aufweist, insbesondere eine Energiekapazität zwischen 2 MWh und 1 GWh.

Das erfindungsgemäße Verfahren kann dadurch weitergebildet sein, dass ein Abstand d₁ der ersten Stelleinrichtung zur Führungsstange auf einem vordefinierten Wert gehalten wird, um Beeinträchtigungen der Wirkungsweise aufgrund mechanischer Abnutzungen auszugleichen.

Das Verfahren kann vorsehen, dass durch ein benutzerdefiniertes Signal zwischen dem Motorbetrieb und dem Generatorbetrieb des Motorgenerators umgeschaltet wird. Das benutzerdefinierte Signal kann dabei von einem Benutzer unmittelbar eingegeben oder mittelbar mittels einer separaten Steuerungseinheit ausgegeben werden.

Vorzugsweise sieht das Verfahren vor, dass die Aufwärts- und/oder die Abwärtsgeschwindigkeit des Läuferblocks geregelt werden, insbesondere innerhalb eines benutzerdefinierten Intervalls für die vertikalen Aufwärts- und/oder Abwärtsgeschwindigkeiten des Läuferblocks.

Weitere Vorteile und Merkmale ergeben sich aus den Ansprüchen und der nachfolgenden Beschreibung, in der Ausführungsbeispiele der Erfindung unter Bezugnahme auf die Zeichnungen im Einzelnen erläutert werden. Dabei zeigen:
- Fig. 1.: eine schematische Seitenansicht auf eine erfindungsgemäße Speichervorrichtung in einer ersten Ausgestaltung;
- Fig. 2.: eine erste Stelleinrichtung der Speichervorrichtung gemäß Fig. 1 in einer vergrößerten Ansicht;
- Fig. 3.: einen Schnitt durch die Schnittebene A-A einer zweiten Ausgestaltung der Speichervorrichtung;
- Fig. 4.: einen Schnitt durch die die Schnittebene B-B der Speichervorrichtung aus Fig. 3 und
- Fig. 5.: eine dritte Ausgestaltung der erfindungsgemäßen Speichervorrichtung in einer schematischen Seitenansicht.

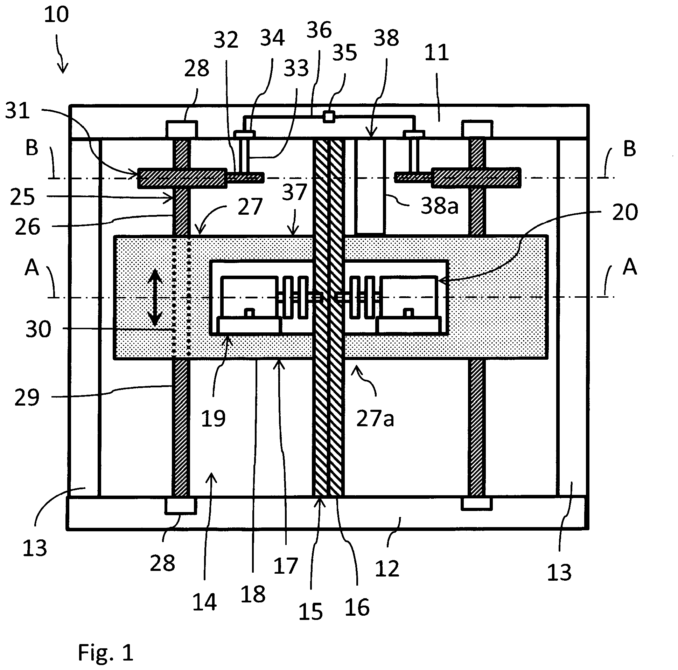

Fig. 1 zeigt eine erfindungsgemäße Speichervorrichtung 10 in einer schematischen Seitenansicht. Die Speichervorrichtung 10 ist nach oben durch eine obere Abdeckung 11, nach unten durch eine untere Abdeckung 12 und seitlich durch seitliche Abdeckungen 13 begrenzt. Die Abdeckungen 11, 12, 13 umgeben einen Innenraum 14 der Speichervorrichtung 10.

Innerhalb des Innenraums 14 sind horizontal zentriert zwei vertikal ausgerichtete Führungsstangen 15 benachbart zueinander angeordnet, wobei im gezeigten Ausführungsbeispiel die Führungsstangen 15 als Zahnstangen 16 ausgebildet sind. Die Zahnstangen 16 sind jeweils fest mit der oberen Abdeckung 11 und mit der unteren Abdeckung 12 verbunden und weisen an ihrer jeweiligen Außenseite ein nicht dargestelltes Zahnprofil auf.

Ein Läuferblock 17 ist im Innenraum 14 der Speichervorrichtung 10 angeordnet und als zylindrischer Massekörper 18 aus Zement ausgebildet. Der Massekörper 18 ist vertikal entlang der Zahnstangen 16 beweglich. Ein Hohlraum 19 innerhalb des Massekörpers 18 wird von den Zahnstangen 16 durchgriffen und weist zwei erste Stelleinrichtungen 20 auf, die jeweils mit den Zahnstangen 16 verbunden sind.

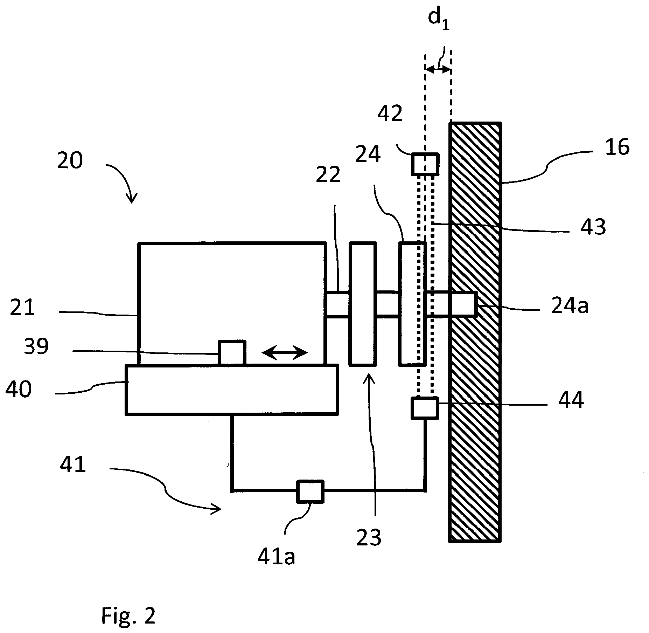

Die erste Stelleinrichtung 20 ist aus Gründen der Übersichtlichkeit in Fig. 2 vergrößert dargestellt und weist einen Motorgenerator 21 auf, der mittels einer Welle 22, einer Übersetzung 23 aus mehreren Zahnrädern 24, 24a mit der Zahnstange 12 verbunden ist, wobei das Zahnrad 24a in Eingriff mit der Zahnstange 12 steht. Die Verbindung der ersten Stelleinrichtung 20 mit der Zahnstange 12 ist derart ausgestaltet, dass der Massekörper 18 entlang der Zahnstange 12 vertikal beweglich ist.

Der Motorgenerator 21 weist zwei Betriebsarten auf: In einem Motorbetrieb wird dem Motorgenerator 21 über nicht dargestellte Leitungen elektrische Energie zugeführt, die in der Speichervorrichtung 10 zu speichern ist. Zu diesem Zweck versetzt der Motorgenerator 21 über die Welle 22 und die Übersetzung 23 insbesondere das Zahnrad 24a derart in Rotation, dass sich der Massekörper 18 vertikal entlang der Zahnstange 16 nach oben bewegt. Hierdurch wird die elektrische Energie zunächst in kinetische Energie des Massekörpers 18 umgewandelt und infolge seiner Auslenkung gegenüber der Schwerkraft als potentielle Energie gespeichert. In einem Generatorbetrieb des Motorgenerators 21 wird der Massekörper 18 vertikal nach unten entlang der Zahnstange 16 bewegt, so dass das Zahnrad 24a, die Übersetzung 23 sowie die Welle 22 in umgekehrter Richtung angetrieben werden. Ähnlich zu einem Dynamo wandelt der Motorgenerator 21 diese kinetische Energie in elektrische Energie um, die externen Verbrauchern über die nicht dargestellten Verbindungsleitungen zur Verfügung gestellt werden.

Die Zahnstangen 16 sind gemäß Fig. 1 in Bezug auf den Massekörper 18 horizontal zentriert in dessen Mittelbereich 27a angeordnet, so dass sich horizontale Kräfte, die infolge der vertikalen Bewegungen des Massekörpers 18 auftreten, gegenseitig kompensieren.

In Fig. 1 ist eine zweite Stelleinrichtung 25 mit vier Gewindestangen 26 in einem radialen Außenbereich 27 des zylindrischen Massekörpers 18 vorgesehen, wobei zwei Gewindestangen 26 in der Perspektive der Fig. 1 im hinteren Bereich angeordnet sind und von den zwei vorderen Gewindestangen 26 verdeckt sind. Die Gewindestangen 26 erstrecken sich in vertikaler Richtung und sind jeweils mittels Drehlagern 28 mit der oberen Abdeckung 11 und mit der unteren Abdeckung 12 verbunden.

Die Gewindestangen 26 sind jeweils mit einem Außengewinde 29 versehen, das komplementär zu einem Innengewinde 30 des Massekörpers 18 ausgestaltet ist, so dass die Gewindestangen 26 den Massekörper 18 durchgreifen und mit diesem in Eingriff stehen. Die Steigung des Außengewindes 29 und des darauf abgestimmten Innengewindes 30 ist derart, dass eine selbständige Abwärtsbewegung des Massekörpers 18 vermieden ist.

In Fig. 1 sind die Gewindestangen 26 jeweils über eine Übersetzung 31 mit zwei Zahnrädern 32 mit einer Welle 33 eines Antriebs 34 verbunden, so dass der Antrieb 34 die zugeordnete Gewindestange 26 in Rotation versetzen kann. Die Antriebe 34 sind mit einer gemeinsamen Steuereinheit 35 mittels elektrischer Leitungen 36 verbunden. Die Steuereinheit 35 treibt die Gewindestangen 26 derart synchronisiert an, dass sich sämtliche Gewindestangen 26 mit gleicher Drehgeschwindigkeit bewegen, wobei zur Vermeidung von mechanischen Belastungen infolge großer Drehmomente jeweils zwei Gewindestangen 26 gegenläufig zueinander angetrieben werden.

Die zweite Stelleinrichtung 25 bewirkt die vertikale Abwärtsbewegung des Massekörpers 18, bei der, wie bereits oben beschrieben, die potentielle Energie des Massekörpers 18 durch den Motorgenerator 21 in dessen Generatorbetrieb in elektrische Energie umgewandelt wird. Im Ausführungsbeispiel der Fig. 1 ist die zweite Stelleinrichtung 25 ebenfalls dazu ausgebildet, die vertikale Aufwärtsbewegung des Massekörpers 18 infolge der ersten Stelleinrichtung 20 zu unterstützen, indem die Steuereinheit 35 die Gewindestangen 26 in Rotation versetzt, wobei die Bewegung der Gewindestangen 26 insbesondere auf die Bewegung des Zahnrads 24a der ersten Stelleinrichtung 20 abgestimmt ist. Hierzu ist die Steuereinheit 35 über eine nicht dargestellte Verbindung mit der ersten Stelleinrichtung 20 verbunden.

Zwischen der oberen Abdeckung 11 und einer Oberseite 37 des Massekörpers 18 ist ein Dämpfungselement 38 als Federelement 38a vorgesehen, wobei das Federelement 38a in Fig. 1 aus Gründen der Übersicht nur auf der rechten Seite des Massekörpers 18 gezeigt ist. Das Federelement 38a beaufschlagt den Massekörper 18 mit einer vertikal nach unten gerichteten Kraft. Mittels des Federelements 38 wird das Maß der gespeicherten potentiellen Energie des Massekörpers 18 pro zurückgelegten Meter vergrößert, da der Massekörper 18 bei seiner vertikalen Aufwärtsbewegung eine größere Kraft überwinden muss.

Der Abstand der ersten Stelleinrichtung 20 zur zugeordneten Zahnstange 16 ist veränderbar. In Fig. 2 ist skizziert, dass der Motorgenerator 21 auf einem Linearschlitten 39 angeordnet ist, der entlang einer Linearführung 40 horizontal in Richtung der Zahnstange 16 bewegbar ist. Infolge mechanischer Abnutzungen kann der Verbindung der ersten Stelleinrichtung 20 mit Zahnstange 16 beeinträchtigt werden, was die Effizienz beim Betrieb der Speichervorrichtung 10 beeinträchtigt. Mittels einer Regeleinrichtung 41 ist beispielsweise der Abstand d₁ zwischen dem Zahnrad 24 der Übersetzung 23 von der Zahnstange 16 regelbar. Die Regeleinrichtung 41 weist eine in Fig. 2 oben angeordnete Laserdiode 42 auf, die einen kollimierten Laserstrahl 43, der in Fig. 2 gestrichelt dargestellt ist, zu einer in Fig. 2 unten angeordneten Fotodiode 44 aussendet, die die Intensität des Laserstrahls 43 registriert. In Fig. 2 wird der Laserstrahl 43 etwa zur Hälfte vom Zahnrad 24 verdeckt, so dass die Fotodiode 44 die Hälfte der Gesamtintensität des Laserstrahls 43 aufnimmt. Verändert sich der Abstand d₁ des Zahnrades 24 zur Zahnstange 16, verändert sich auch die gemessene Intensität an der Fotodiode 44. Übersteigt die gemessene Intensität ein benutzerdefiniertes Intervall, veranlasst eine Steuereinrichtung 41a der Regeleinrichtung 41 den Linearschlitten 39 derart zu einer Bewegung entlang der Linearführung 40, dass die gemessene Intensität des Laserstrahls 43 an der Fotodiode 44 wieder im benutzerdefinierten Intervall liegt.

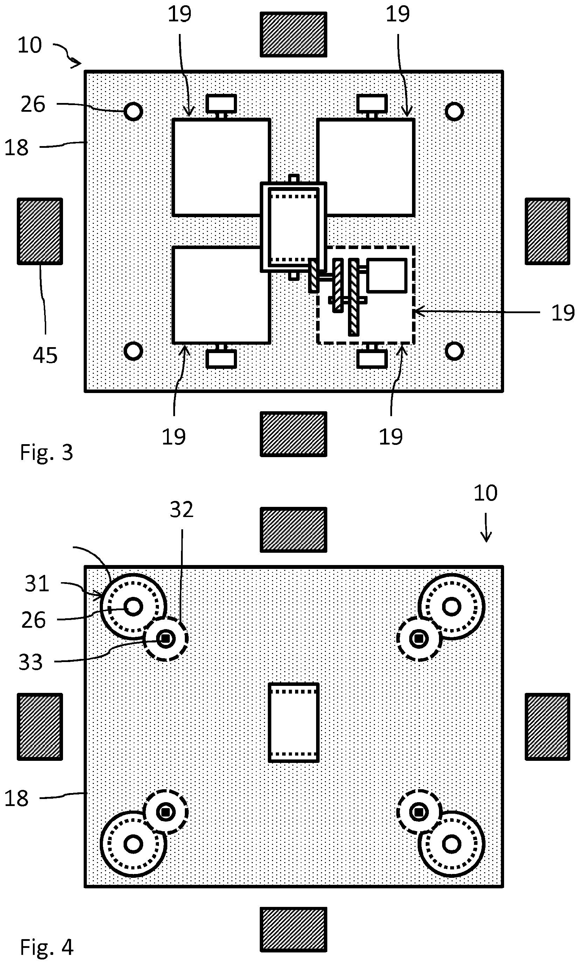

Eine zweite Ausgestaltung der Speichervorrichtung 10 weist einen rechteckigen Massekörper 18 und somit die gleiche Seitenansicht auf wie die erste Ausgestaltung der Speichervorrichtung 10 in Fig. 1. Fig. 3 zeigt die zweite Ausgestaltung der Speichervorrichtung 10 in einem Schnitt durch die Schnittebene A-A, die in Fig. 1 gestrichelt dargestellt ist, und die vertikal zentriert durch den Massekörper 18 verläuft. Die Speichervorrichtung der Fig. 3 weist eine zum Massekörper 18 zentriert angeordnete Zahnstange 16 und vier Gewindestangen 26 in den Eckbereichen des Massekörpers 18 auf. Vier Hohlräume 19 mit jeweils einer ersten Stelleinrichtung 20 sind rechteckig in einem mittleren Bereich des Massekörpers 18 angeordnet, wobei die Komponenten der ersten Stelleinrichtung 20 aus Übersichtsgründen lediglich im Hohlraum 19 unten rechts schematisch dargestellt sind. Die erste Stelleinrichtung 20 der zweiten Ausgestaltung der Speichervorrichtung 20 gemäß Fig. 3 weist im Wesentlichen die gleichen Komponenten auf, wie jene der ersten Ausgestaltung der Fig. 1. Im Ausführungsbeispiel der Fig. 3 besteht die seitliche Abdeckung 13 aus vier rechteckigen Säulen 45, die die obere Abdeckung 11 gegenüber der unteren Abdeckung 12 abstützen.

Fig. 4 zeigt die zweite Ausgestaltung der Speichervorrichtung 10 der Fig. 3 in einer zweiten Schnittebene B-B, die in Fig. 1 schematisch dargestellt ist, und die vertikal zentriert durch die Übersetzung 31 und das Zahnrad 32 des Antriebs 34 der Gewindestangen 26 verläuft. Aus Fig. 4 geht insbesondere hervor, dass die Übersetzung 31 in Eingriff mit dem Zahnrad 32 steht.

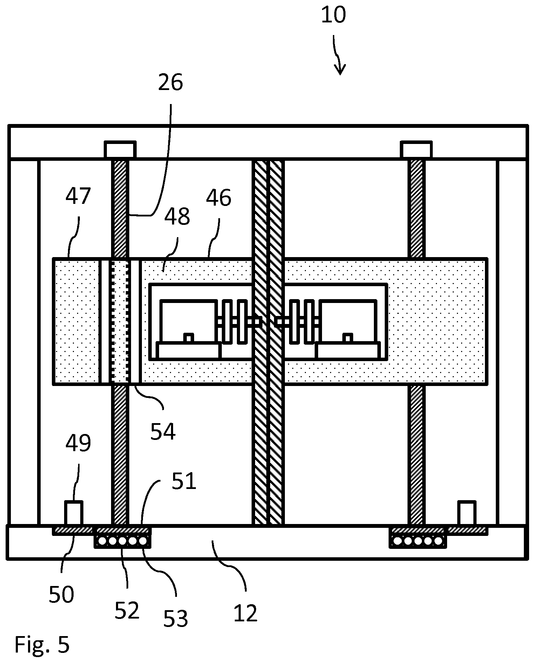

Fig. 5 zeigt eine dritte Ausgestaltung der erfindungsgemäßen Speichervorrichtung 10, die im Wesentlichen der in Fig. 1 gezeigten Ausgestaltung entspricht. Im Gegensatz zur ersten Ausgestaltung weist die dritte Ausgestaltung der erfindungsgemäßen Speichervorrichtung 10 einen Läuferblock 46 mit einer äußeren Hülle 47 aus Stahl auf, die mit Sand 48 als Rieselgut gefüllt ist. Der Läuferblock 46 ist vertikal insbesondere entlang der links gezeigten Zahnstange 26 in bekannter Weise beweglich. Ein an der unteren Abdeckung 12 angeordneter Antrieb 49 treibt ein mit dem Antrieb 49 über eine nicht dargestellte Welle verbundenes Zahnrad 50 an, das mit einer mit der Zahnstange 26 verbundenen Übersetzung 51 in Eingriff steht, um die Zahnstange 26 wie bereits beschrieben in Drehung zu versetzen und insbesondere den Läuferblock 46 vertikal nach unten zu bewegen. Die Übersetzung 51 ist mittels eines Kugellagers 52 mit Kugeln 53, das in der unteren Abdeckung 12 angeordnet ist, gelagert, um Reibungskräfte bei den Drehbewegungen der Zahnstange 26 zu minimieren. Die Zahnstange 26 ist mittels einer skizziert dargestellten Kugelumlaufspindel 54 mit dem Läuferblock 46 verbunden, um Reibungskräfte bei den vertikalen Bewegungen des Läuferblocks 46 zu reduzieren.

## Patentansprüche

1. Speichervorrichtung (10) zum Speichern und Abrufen von Energie, mit mindestens einem Läuferblock (17), der vertikal beweglich an mindestens einer vertikal angeordneten Führungsstange (15) angeordnet ist, wobei der Läuferblock (17) eine erste Stelleinrichtung (20) mit mindestens einem Motorgenerator (21) aufweist, die derart mittels mit der Führungsstange (15) verbunden ist, dass der Läuferblock (17) mittels der ersten Stelleinrichtung (20) längs der Führungsstange (15) vertikal nach oben bewegbar ist, so dass in einem Motorbetrieb dem Motorgenerator (21) zugeführte elektrische Energie als potentielle Energie des Läuferblocks (17) speicherbar ist, und wobei der Läuferblock (17) nach unten bewegbar ist, so dass in einem Generatorbetrieb die potentielle Energie des Läuferblocks (17) im Motorgenerator (21) in elektrische Energie umwandelbar ist, wobei eine zweite Stelleinrichtung (25) mit mindestens einem Antrieb (34) vorgesehen ist, die mit dem Läuferblock (17) verbunden ist und mittels der der Läuferblock (17) nach unten bewegbar ist, **dadurch gekennzeichnet, dass** die zweite Stelleinrichtung (25) mindestens eine Gewindestange (26) mit einem Gewinde (29) aufweist, die mit dem Läuferblock (17) in Eingriff steht und diesen durchgreift.

2. Speichervorrichtung nach Anspruch 1, **dadurch gekennzeichnet, dass** mindestens zwei Gewindestangen (26) vorgesehen sind, die mittels einer gemeinsamen Steuereinheit (35) ansteuerbar sind.

3. Speichervorrichtung nach einem der Ansprüche 1 oder 2, **dadurch gekennzeichnet, dass** die Gewindestange (26) in einem äußeren Randbereich (27) des Läuferblocks (17) angeordnet ist.

4. Speichervorrichtung nach einem der Ansprüche 1 bis 3, **dadurch gekennzeichnet, dass** zweite Stelleinrichtung (25) derart ausgestaltet ist, dass die vertikale Aufwärtsbewegung des Läuferblocks (17) durch die zweite Stelleinrichtung (25) zusätzlich antreibbar ist.

5. Speichervorrichtung nach einem der Ansprüche 1 bis 4, **dadurch gekennzeichnet, dass** die vertikale Geschwindigkeiten des Läuferblocks (17) bei dessen Aufwärts- und/oder Abwärtsbewegungen veränderlich sind.

6. Speichervorrichtung nach einem der Ansprüche 1 bis 5, **dadurch gekennzeichnet, dass** die erste Stelleinrichtung (20) mit der zweiten Stelleinrichtung (25) synchronisierbar ist mittels einer gemeinsamen Steuereinheit (35), die mit der ersten Stelleinrichtung (20) und mit der zweiten Stelleinrichtung (25) verbunden ist.

7. Speichervorrichtung nach einem der Ansprüche 1 bis 6, **dadurch gekennzeichnet, dass** die Führungsstange (15) in einem Mittelbereich (27a) des Läuferblocks (17) angeordnet ist und den Läuferblock (17) durchgreift.

8. Speichervorrichtung nach einem der Ansprüche 1 bis 7, **dadurch gekennzeichnet, dass** die erste Stelleinrichtung (20) innerhalb des Läuferblocks (17) angeordnet ist.

9. Speichervorrichtung nach einem der Ansprüche 1 bis 8, **dadurch gekennzeichnet, dass** ein Abstand d₁ der ersten Stelleinrichtung (20) von der Führungsstange (15) veränderbar ist.

10. Speichervorrichtung nach Anspruch 9, **dadurch gekennzeichnet, dass** mindestens eine Komponente der ersten Stelleinrichtung (20) auf einem Linearschlitten (39) angeordnet und auf diesem in Richtung der Führungsstange (15) beweglich ist.

11. Speichervorrichtung nach einem der Ansprüche 9 oder 10, **dadurch gekennzeichnet, dass** eine Regeleinrichtung (41) vorgesehen ist, mittels der der Abstand d₁ zwischen der ersten Stelleinrichtung (20) und der Führungsstange (15) auf einem vordefinierten Wert haltbar ist.

12. Speichervorrichtung nach einem der Ansprüche 1 bis 11, **dadurch gekennzeichnet, dass** zwischen dem Läuferblock (17) und einer oberen Abdeckung (11) der Speichervorrichtung (10) mindestens ein Dämpfungselement (38) angeordnet ist, so dass der Läuferblock (17) mit einer Kraftkomponente vertikal nach unten beaufschlagbar ist.

13. Verfahren zum Speichern und Abrufen von Energie mittels einer Speichervorrichtung (10) mit einem Läuferblock (17), der vertikal an einer Führungsstange (15) beweglich ist, und mit einer ersten Stelleinrichtung (20), die einen Motorgenerator (21) aufweist, und die mit dem Läuferblock (17) verbunden ist, wobei das Verfahren zur Speicherung von Energie die folgenden Schritte umfasst:
- in einem Motorbetrieb wird dem Motorgenerator (21) Energie zugeführt und
- die erste Stelleinrichtung (20) bewegt den Läuferblock (17) vertikal an der Führungsstange (15) nach oben, so dass die zugeführte Energie als potentielle Energie des Läuferblocks (17) gespeichert wird;
wobei zum Abrufen von Energie eine zweite Stelleinrichtung (25), die mit dem Läuferblock (17) verbunden ist, den Läuferblock (17) vertikal an der Führungsstange (15) nach unten bewegt, so dass der Motorgenerator (21) in einem Generatorbetrieb die potentielle Energie des Läuferblocks (17) in elektrische Energie umwandelt, **dadurch gekennzeichnet, dass** die zweite Stelleinrichtung (25) mindestens eine Gewindestange (26) mit einem Gewinde (29) aufweist, die mit dem Läuferblock (17) in Eingriff steht und diesen durchgreift.

14. Verfahren nach Anspruch 13, **dadurch gekennzeichnet, dass** ein Abstand d₁ der ersten Stelleinrichtung (20) zur Führungsstange (15) auf einem vordefinierten Wert gehalten wird.

15. Verfahren nach einem der Ansprüche 13 oder 14, **dadurch gekennzeichnet, dass** die Auf- und/oder die Abwärtsgeschwindigkeit des Läuferblocks (15) geregelt werden.

## Claims

1. Storage device (10) for storing and retrieving energy, having at least one rotor block (17) which is arranged vertically movably on at least one vertically arranged guide rod (15), the rotor block (17) having a first adjusting device (20) with at least one motor generator (21) which is connected by means of the guide rod (15) in such a way that the rotor block (17) is moved vertically upwards along the guide rod (15) by means of the first adjusting device (20) can be moved, so that in motorized mode electrical energy supplied to the motor generator (21) can be stored as potential energy of the rotor block (17), whereby the slider block (17) can be moved downwards so that in a generator mode, the potential energy of the rotor block (17) can be converted into electrical energy in the motor generator (21), wherein a second adjusting device (25) with at least one drive (34) is provided, which is connected to the rotor block (17) and by means of which the rotor block (17) can be moved downwards, **characterized in that** the second adjusting device (25) comprises at least one threaded rod (26) with a thread (29), which engages with the rotor block (17) and engages through it.

2. Storage device according to claim 1, **characterized in that** at least two threaded rods (26) are provided, which can be actuated by means of a common control unit (35) .

3. Storage device according to one of claims 1 or 2, **characterized in that** the threaded rod (26) is arranged in an outer edge area (27) of the rotor block (17).

4. Storage device according to one of claims 1 to 3, **characterized in that** the second adjusting device (25) is designed in such a way that the vertical upward movement of the rotor block (17) can also be driven by the second adjusting device (25).

5. Storage device according to one of the claims 1 to 4, **characterized in that** the vertical speeds of the slider block (17) are variable during its upward and/or downward movements.

6. Storage device according to one of claims 1 to 5, **characterized in that** the first adjusting device (20) can be synchronized with the second adjusting device (25) by means of a common control unit (35) which is connected to the first adjusting device (20) and is connected to the second adjusting device (25).

7. Storage device according to one of claims 1 to 6, **characterized in that** the guide rod (15) is arranged in a central region (27a) of the slider block (17) and engages through the slider block (17).

8. Storage device according to one of claims 1 to 7, **characterized in that** the first adjusting device (20) is arranged inside the rotor block (17).

9. Storage device according to one of claims 1 to 8, **characterized in that** a distance d₁ of the first adjusting device (20) from the guide rod (15) is variable.

10. Storage device according to claim 9, **characterized in that** at least one component of the first adjusting device (20) is arranged on a linear slide (39) and is movable thereon in the direction of the guide rod (15).

11. Storage device according to one of claims 9 or 10, **characterized in that** a regulating device (41) is provided, by means of which the distance d₁ between the first adjusting device (20) and the guide rod (15) can be maintained at a predefined value.

12. Storage device according to one of claims 1 to 11, **characterized in that** between the rotor block (17) and an upper cover (11) of the storage device (10) at least one damping element (38) is arranged, so that the rotor block (17) can be subjected to a force component vertically downwards.

13. Method for storing and retrieving energy by means of a storage device (10) with a rotor block (17) which is vertically movable on a guide rod (15), and a first adjusting device (20) having a motor generator (21) and being connected to the rotor block (17), the method of storing energy comprising the steps of comprising the following steps:
- In motor operation, the motor generator (21) is supplied with energy and
- the first adjusting device (20) moves the rotor block (17) vertically upwards on the guide rod (15) upwards so that the energy supplied is stored as potential energy of the rotor block (17),
wherein for the retrieval of energy a second adjusting device (25) connected to the rotor block (17), the rotor block (17) is moved vertically downwards on the guide rod (15) so that the motor generator (21) converts the potential energy of the rotor block (17) into electrical energy in a generator mode, **characterized in that** the second adjusting device (25) has at least one threaded rod (26) with a thread (29), which is in engagement with the rotor block (17) and engages through it.

14. Method according to claim 13, **characterized in that** a distance d₁ between the first adjusting device (20) to the guide rod (15) is maintained at a predefined value.

15. Method according to one of claims 1 or 14, **characterized in that** the upward and/or downward speed of the rotor block (15) are controlled.

## Revendications

1. Dispositif de stockage (10) pour le stockage et l'appel d'énergie, avec au moins un bloc rotor (17) qui est disposé de manière mobile verticalement sur au moins une barre de guidage (15) disposée verticalement, le bloc rotor (17) présentant un premier dispositif de réglage (20) avec au moins un moteur-générateur (21), qui est relié au moyen de la barre de guidage (15) de telle sorte que le bloc rotor (17) est déplacé verticalement vers le haut le long de la barre de guidage (15) au moyen du premier dispositif de réglage (20) mobile, de sorte qu'en mode moteur l'énergie électrique fournie au moteur-générateur (21) peut être stockée sous forme d'énergie potentielle du bloc rotor (17), le bloc rotor (17) étant mobile vers le bas, de sorte que dans un fonctionnement en générateur, l'énergie potentielle du bloc rotor (17) peut être convertie en énergie électrique dans le moteur-générateur (21) un deuxième dispositif de réglage (25) est prévu avec au moins un entraînement (34), qui est relié au bloc de rotor (17) et au moyen duquel le bloc de rotor (17) peut être déplacé vers le bas, et **caractérisé en ce que** le deuxième dispositif de réglage (25) a au moins une tige filetée (26) avec un filetage (29) qui est en prise avec le bloc rotor (17) et qui le traverse.

2. Dispositif de stockage selon la revendication 1, **caractérisé en ce qu'**il est prévu au moins deux tiges filetées (26) qui peuvent être commandées au moyen d'une unité de commande commune (35).

3. Dispositif de stockage selon l'une des revendications 1 ou 2, **caractérisé en ce que** la tige filetée (26) est disposée dans une zone marginale extérieure (27) du bloc rotor (17).

4. Dispositif de stockage selon l'une quelconque des revendications 1 à 3, **caractérisé en ce que** des deuxièmes moyens d'actionnement (25) est conçu de telle sorte que le mouvement vertical vers le haut du bloc rotor (17) peut être entraîné en plus par le deuxième dispositif de réglage (25).

5. Dispositif de stockage selon l'une des propositions 1 à 4, **caractérisé en ce que** les vitesses verticales du bloc rotor (17) sont variables lors de ses mouvements vers le haut et/ou vers le bas.

6. Dispositif de mémoire selon l'une des revendications 1 à 5, **caractérisé en ce que** le premier dispositif de réglage (20) peut être synchronisé avec le deuxième dispositif de réglage (25) au moyen d'une unité de commande commune (35) qui est reliée au premier dispositif de réglage (20) et au deuxième dispositif de réglage (25).

7. Dispositif de stockage selon l'une des revendications 1 à 6, **caractérisé en ce que** la barre de guidage (15) est disposée dans une zone centrale (27a) du bloc rotor (17) et traverse le bloc rotor (17).

8. Dispositif de stockage selon l'une des revendications 1 à 7, **caractérisé en ce que** le premier dispositif de réglage (20) est disposé à l'intérieur du bloc rotor (17) .

9. Dispositif de stockage selon l'une des revendications 1 à 8, **caractérisé en ce qu'**une distance d₁ du premier dispositif de réglage (20) de la barre de guidage (15) est modifiable.

10. Dispositif de stockage selon la revendication 9, **caractérisé en ce qu'**au moins un composant du premier dispositif de réglage (20) est disposé sur un chariot linéaire (39) et est mobile sur celui-ci en direction de la barre de guidage (15).

11. Dispositif de stockage selon l'une des revendications 9 ou 10, **caractérisé en ce qu'**il est prévu un dispositif de régulation (41) au moyen duquel la distance d₁ entre le premier dispositif de réglage (20) et la barre de guidage (15) peut être maintenue à une valeur prédéfinie.

12. Dispositif de stockage selon l'une quelconque des revendications 1 à 11, **caractérisé en ce que**, entre le bloc rotor (17) et un couvercle supérieur (11) de la au moins un élément d'amortissement (38) est disposé dans le dispositif de stockage (10), de sorte que le bloc rotor (17) peut être soumis à une composante de force verticale vers le bas.

13. Procédé d'accumulation et de récupération d'énergie au moyen d'un dispositif de stockage (10) comprenant un bloc rotorique (10) et un bloc rotor (17) qui est monté verticalement sur une barre de guidage (15), et avec un premier dispositif d'actionnement (20) qui présente un générateur à moteur (21) et qui est relié au bloc rotor (17), le procédé de stockage d'énergie comprend les étapes suivantes :
- dans un mode de fonctionnement du moteur, le générateur du moteur (21) est alimenté en énergie et
- le premier dispositif de réglage (20) déplace le bloc rotor (17) verticalement sur la barre de guidage (15) vers le haut, de sorte que l'énergie alimenté est stockée sous forme d'énergie potentielle du bloc rotor (17),
dans lequel pour la récupération d'énergie, un deuxième dispositif de réglage (25) est relié au bloc rotor (17), verticalement vers le bas sur la barre de guidage (15), de sorte que le générateur à moteur (21) transforme l'énergie potentielle du bloc rotor (17) en énergie électrique dans un fonctionnement en générateur, **caractérisé en ce que** le deuxième dispositif de réglage (25) présente au moins une tige filetée (26) avec un filetage (29), qui est en prise avec le bloc rotor (17) et le traverse.

14. Procédé selon la revendication 13, **caractérisé en ce qu'**une distance d₁ du premier dispositif de réglage (20) est fixée à une valeur prédéfinie par rapport à la barre de guidage (15) est maintenue à une valeur prédéfinie.

15. Procédé selon l'une des revendications 1 ou 14, **caractérisé en ce que** les vitesses de montée et/ou de descente du bloc rotor (15) sont contrôlées.
